# EUROPEAN PATENT SPECIFICATION

(11) **EP 3 858 658 B1**
(45) Date of publication and mention of the grant of the patent: **16.08.2023**
(21) Application number: 20154960.7
(22) Date of filing: 31.01.2020
(51) Int. Cl.: B60L 53/16, H01R 13/639, B60L 3/00

(54) **ELECTROMECHANICAL ACTUATOR HAVING A SAFETY UNLOCKING MECHANISM**
ELEKTROMECHANISCHER AKTUATOR MIT EINEM SICHERHEITSENTRIEGELUNGSMECHANISMUS
ACTIONNEUR ÉLECTROMÉCANIQUE DOTÉ D'UN MÉCANISME DE DÉVERROUILLAGE DE SÉCURITÉ

(43) Date of publication of application: 04.08.2021
(73) Proprietor: Jabil Inc., St. Petersburg, Florida 33716 (US)
(72) Inventor: Kovacs, Ernst, 2514 Traiskirchen (AT)
(74) Representative: Röggla, Harald

(56) References cited:
- EP-A1- 2 705 975
- EP-A1- 2 867 957
- CN-A- 105 703 165
- DE-A1-102011 050 998
- DE-A1-102013 215 767
- KR-A- 20180 126 873
- US-A1- 2013 252 448
- US-A1- 2016 280 086
- US-A1- 2019 199 037
- US-A1- 2019 221 951
- US-A1- 2019 375 300
- US-B1- 9 950 635
- US-B2- 9 533 586

## Description

The present invention relates to an electromechanical actuator for locking a charging cable in a charging receptacle, wherein the actuator comprises a housing, a locking pin, and a drive, wherein the drive is configured to move the locking pin from a first position, in which the locking pin releases the charging cable, to a second position, in which the locking pin engages in an opening of the charging cable inserted into the charging receptacle. In a further aspect, the invention relates to a charging receptacle for locking a charging cable.

In the art it is known to secure charging cables, for example charging cables for electric vehicles, against theft or accidental removal. To this end, an electromechanical actuator is used, which comprises a locking pin. The locking pin can be inserted into a hole of the charging receptacle as well as into an opening in the charging cable to lock the charging cable with the charging receptacle and the actuator, respectively. To this end, the actuator comprises a drive, which can be controlled by means of electrical signals. This allows for a remote locking and unlocking of the charging cable, for example.

Examples of locking devices for cables are shown in US9533586B2, DE102013215767A1, US2019199037A1, US2016280086A1, CN105703165A.

While the locking of the charging cable is beneficial under normal circumstances, it is detrimental in emergency situations in which the cable needs to be removed quickly. With electromechanical actuators according to the state of the art, only users authorised to control the drive can release the charging cable. As it is not always easy or even possible to find said authorised user in emergency situations, the charging cable may need to be severed, causing permanent damage.

Furthermore, in case the electromechanical actuator malfunctions, the locking pin usually cannot be moved back into the first position to release the cable. In such cases, the actuators according to the state of the art need to be disassembled completely to disengage the locking pin from the opening of the charging cable.

The disclosures KR20180126873A and US2019375300A1 show that electromechanical locking devices can be provided with windows for unlocking in emergency situations.

However, such windows provide an unrestricted access and can be accessed by anybody without the permission or knowledge of the owner.

It is therefore an object of the invention to provide an electromechanical actuator or charging receptacle for locking a charging cable in a charging receptacle, wherein the actuator has advantageous properties in emergency situation.

This aim is achieved in a first aspect of the invention by means of an electromechanical actuator for locking a charging cable in a charging receptacle, wherein the actuator comprises a housing, a locking pin, and a drive, which is configured to move the locking pin from a first position, in which the locking pin releases the charging cable, to a second position, in which the locking pin engages in an opening of the charging cable inserted into the charging receptacle, wherein the housing comprises a window through which the locking pin or the drive can be accessed for moving the locking pin from the second position to the first position.

The window within the housing allows for accessing the locking pin either directly or via the drive such that the actuator provides a possibility of mechanically moving the locking pin to release the charging cable. This solution has the advantage that the locking pin can easily be moved by third parties without having to electromechanically access the drive to move the locking pin.

The window in the housing furthermore has advantages over alternative mechanical solutions such as an easily accessible switch or means to open and disassemble the actuator. The window on the one hand allows to access the locking pin or its drive but on the other hand restricts access in such a way that the housing has to be penetrated to access the locking pin or its drive.

Furthermore, the window is sealed by means of a breakable barrier, which is further preferably moulded as a thinner section of the housing. Sealing the window with a breakable barrier has the advantage that a tampering of the actuator can easily be ascertained after the fact. As such, the breakable barrier is a means to provide fraud protection. Once the barrier is broken, the actuator cannot easily be reversed to its original state, warning the user or owner of the actuator or charging cable that the actuator has been mechanically accessed. Preferable materials for the barrier are glass, ceramics, or plastics that can be broken manually. In the especially preferred embodiment in which the barrier is moulded as a thinner section of the housing, the breakable barrier can look just like the housing such that only people with knowledge of the location of the barrier can break said barrier. This further reduces the risk of an unauthorised access of the actuator.

It is further preferred if the window has a size that does not allow to access the locking pin or drive by means of a finger. This has the advantage that a tool is needed to access the drive or locking pin, making it harder to release the charging cable on the fly. Should an unauthorised party attempt to release the charging cable, this would be more easily noticeable by the user or owner of the actuator or charging cable. Therefore, the window preferably has a size of less than 1 cm² and/or a depth of at least 0,5 cm between the outside of the housing and the position at which the locking pin or drive can be accessed.

In an advantageous embodiment, the actuator comprises a tool, which can be led through the window to access the locking pin or drive. The tool may be a metal pin or shaft, which can also act as a lever to move the locking pin. The tool can be either attached to the actuator, for example by means of a chain, or be kept in the vicinity of the actuator, in which case the actuator and the tool form a kit of parts.

In a further advantageous embodiment, the drive comprises a pinion, which can be accessed through the window for moving the locking pin from the second position to the first position. The pinion may for this purpose have a recess, for example, in which said tool can engage to move the pinion. The recess can be embodied as a gap between teeth of the pinion, for example. or may be independent therefrom.

In a second aspect, the invention relates to a charging receptacle for locking a charging cable, wherein the charging receptacle comprises a housing for receiving an actuator comprising a locking pin and a drive, which is configured to move the locking pin from a first position, in which the locking pin releases the charging cable, to a second position, in which the locking pin engages in an opening of the charging cable inserted into the charging receptacle, wherein the housing of the charging receptacle comprises a window through which the locking pin or the drive can be accessed for moving the locking pin from the second position to the first position.

This embodiment is an alternative to the one described above, i.e., in s first embodiment the window is situated in the housing of the actuator and in a second embodiment the window is situated in the housing of the charging receptacle. For the second embodiment, the advantages and variations described above for the first embodiment can be utilised as well.

Further details and advantages of the electromechanical actuator and charging receptacle according to the invention will become more apparent in the following description and the accompanying drawings.
Figure 1 shows a charging device according to the state of the art in a perspective view.
Figure 2 shows the locking pin and drive of the charging device of figure 1 in detail.
Figure 3 shows a charging device according to the invention in a perspective view.
Figure 4 shows the charging device of figure 3 in a partially exploded view.
Figure 5 shows the window of the charging device of figure 3 in detail.
Figure 6 shows the window of figure 4 in a broken state.
Figure 7 shows a tool led through the window of figure 6 in a position before moving the locking pin.
Figure 8 shows the tool of figure 7 in a position after moving the locking pin.
Figure 9 shows a further embodiment of the inventive charging device.

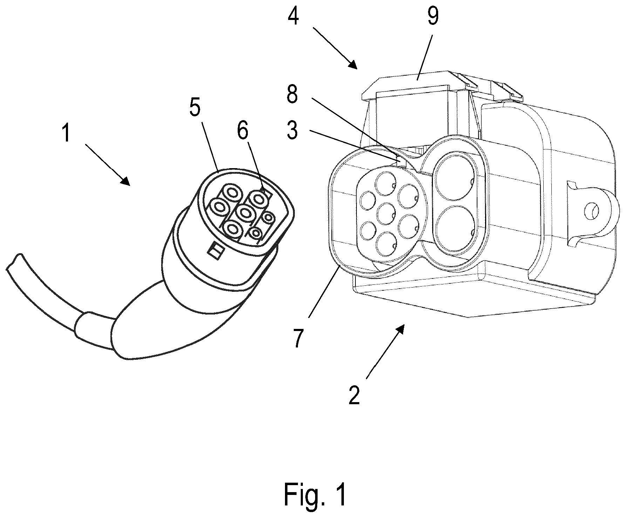

In figure 1, which shows an embodiment according to the state of the art, a charging cable 1 can be locked in a charging receptacle 2 by means of a locking pin 3 of an actuator 4. The charging cable 1 here has an inner guiding wall 5 comprising an opening 6 for receiving the locking pin 3. Likewise, the charging receptacle 2 has an outer guiding wall 7 provided with a hole 8 through which the locking pin 3 can emerge to enter the openings 6 of the charging cable 1. When the charging cable 1 is connected to the charging receptacle 2, the outer guiding wall 7 of the charging receptacle 2 surrounds the inner guiding wall 5 of the charging cable 1 such that the outer guiding wall 7 lies between the actuator 4 and the inner guiding wall 5.

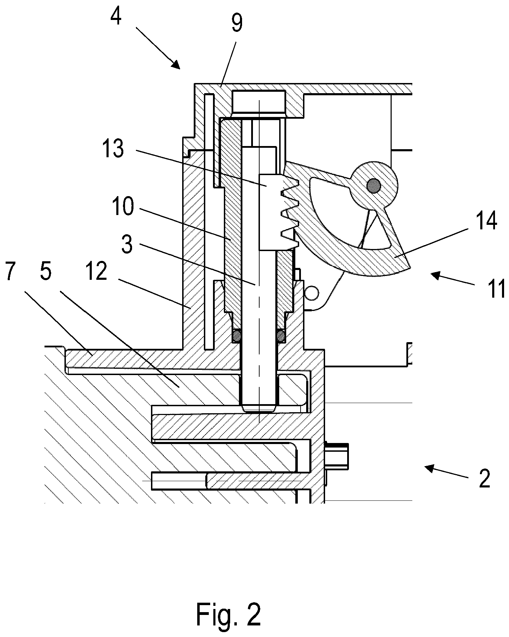

Figure 2 shows the charging receptacle 2 and the electromechanical actuator 4 of figure 1 in detail. In addition to the locking pin 3, the actuator 4 comprises a housing 9, from which said locking pin 3 protrudes, a guide 10 for the locking pin 3, and a drive 11 for moving the locking pin 3.

The housing 9 of the actuator 4 may be a cover plate and can optionally house circuitry for the drive 11, while the drive 11 and the locking pin 3 are located at least partially outside of the housing 9 of the actuator 4. The charging receptacle 2 also has a housing 12, which is here embodied as four sidewalls. The housing 9 of the actuator 4 and the housing 12 of the charging receptacle 2 are complementary such that at least a part of the locking pin 3 and the drive 11 are enclosed by the housing 9 of the actuator 4 and the housing 12 of the charging receptacle 2.

The drive 11 is configured for moving the locking pin 3 from a first position into a second position. In the first position, the locking pin 3 releases the charging cable 1, i.e., the locking pin 3 is in a retracted position such that it does not protrude into the opening 6 of the charging cable 1. In the second position, the locking pin 3 is in an extended position in which the locking pin 3 protrudes into the opening 6 if the charging cable 1 is connected to the charging receptacle 2. In the shown embodiment, the locking pin 3 comprises a rack 13 and the drive 11 comprises a pinion 14 for engaging with the rack 3 and driving the locking pin 3. The drive 11 is controlled by means of analogue or digital drive signals received via an interface, for example, a wireless interface.

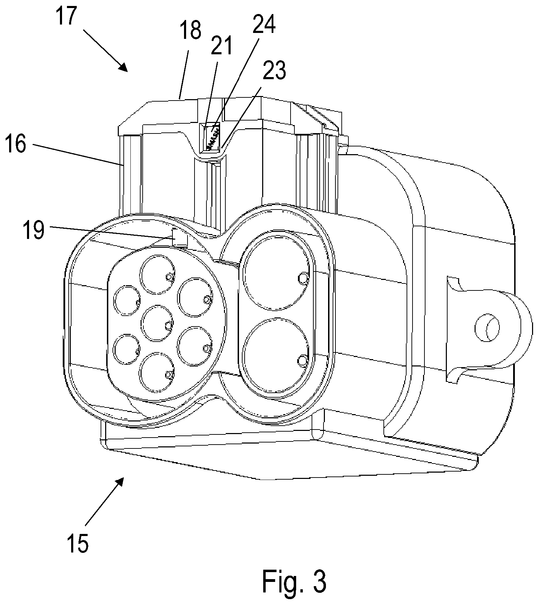

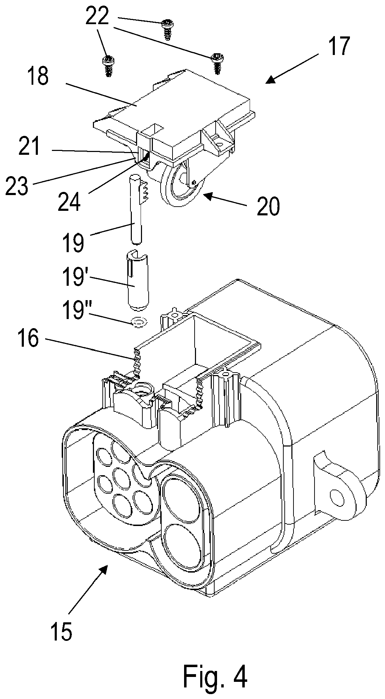

Figures 3 and 4 show a charging receptacle 15 with a housing 16 and an actuator 17 in an embodiment according to the invention. The actuator 17 comprises a housing 18, a locking pin 19, a guide 19' for the locking pin 19, and a drive 20, wherein the locking pin 19 is configured the same as in the state of the art as shown in figure 2. A gasket 19" can be provided as a coupling between guide 19' and charging receptacle 15. The housing 18 of the actuator 17, however, comprises a window 21 through which the locking pin 19 or the drive 20 can be accessed for moving the locking pin 19 from the second position to the first position. This serves as a backup mechanism to mechanically move the locking pin 19 and thus release the charging cable 1 even without controlling the drive 20 via said interface. In the embodiment of figure 3, the charging receptacle 15 and the charging cable 1 may be substantially the same as in the state of the art, wherein the shape of the housing 16 of the charging receptacle 15 may be adapted to be complementary to the housing 18 of the actuator 17.

As in the state of the art, the housing 18 of the actuator 17 may be a cover plate and can optionally house circuitry for the drive 20, while the drive 20 and the locking pin 19 can be located at least partially outside of the housing 18 of the actuator 17. The housing 18 of the actuator 17 and the housing 16 of the charging receptacle 15 are complementary such that at least a part of the locking pin 19 and the drive 20 are enclosed by the housing 18 of the actuator 17 and the housing 16 of the charging receptacle 15. The housing 18 of the actuator 17 is preferably screwed to the housing 16 of the charging receptacle 15 by means of screws 22. If the housing 18 of the actuator 17 is a cover plate, it may have an extension 23 on one side such that the window 21 can be located in said extension 23. The extension 23 may be complementary to the housing 16 of the charging receptacle 15.

In other embodiments, the housing 18 of the actuator 17 may be a box, in which the drive 20 is completely enclosed and the locking pin 19 only protrudes to lock the charging cable 1. In this case, the window 21 may be located in a sidewall or top cover of the box to access the locking pin 19 or drive 20, respectively. The actuator 17 with its box-like housing 18 can simply be placed onto the charging receptacle 15 in such a way that the locking pin 19 can protrude into the opening 8 of the charging receptacle 2.

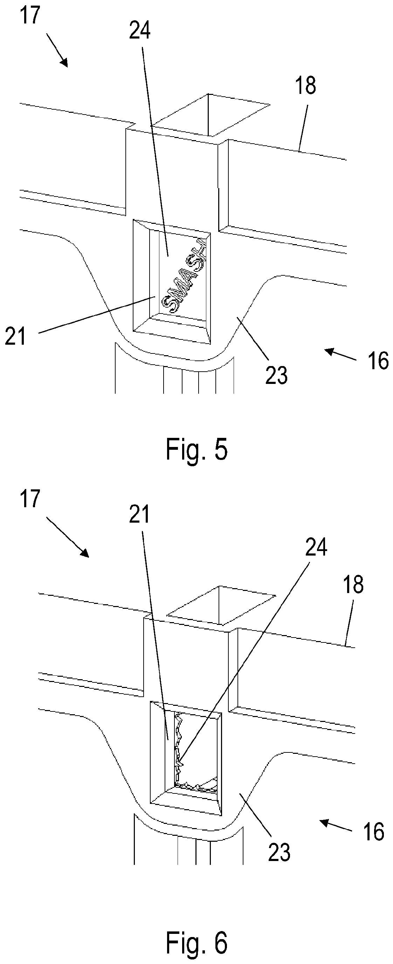

In figure 3 it can furthermore be seen that the window 21 can be sealed by means of a breakable barrier 24 such that a mechanical access to the locking pin 19 or drive 20 can easily be verified. Figure 5 shows the barrier 24 in more detail while figure 6 shows the barrier 24 in a broken state. The barrier 24 is preferably made out of plastic or glass to ensure that the barrier can easily be broken if needed. Furthermore, the barrier can be moulded as a thinner section of the housing 18.

The window 21 preferably has a size such that it can only be accessed by tools, e.g., the window 21 can have a size of less than 1 cm² and/or has a depth of at least 0,5 cm between the outside of the housing 18 and the position at which the locking pin 19 or drive 20 can be accessed. In this way, an unauthorised person cannot simply move the locking pin 19 by means of a finger to release the charging cable 1 unnoticed.

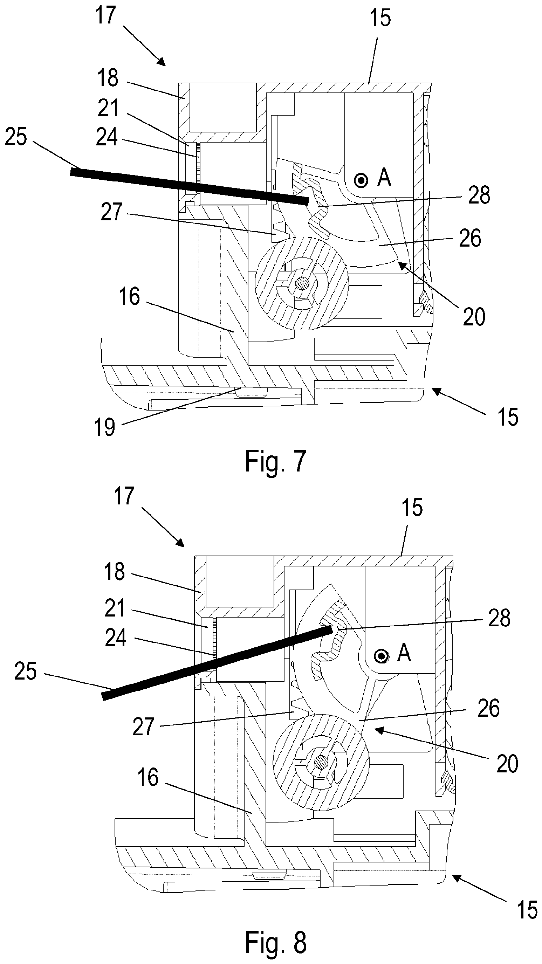

Figure 7 depicts the inner structure of the actuator 17 and charging receptacle 15 in more detail. The locking pin 19 is in an extended position such that it locks the charging cable 1. It is shown that the barrier 24 is in a broken state and that a tool 25 is led through the window 21. The drive 20 of the actuator 17 comprises a pinion 26, which engages in a rack 27 of the locking pin 19 to drive the locking pin 19. The pinion 26 can for this purpose have a recess 28, into which the tool 25 can engage to rotate the pinion 26 about an axis A. As the pinion 26 engages with the rack 27 of the locking pin 19, the locking pin 19 can be mechanically moved into a redacted position as shown in figure 8 by means of the tool 25.

Alternatively, the locking pin 19 can have a recess such that the tool 25 can move the locking pin 319 directly to unlock the charging cable 1. In each case, the window 21 is located in the housing 18 of the actuator 17 in such a way as to be able to access the recess 28 of the pinion 26 or locking pin 19, respectively, in the first and second position of the actuator 17.

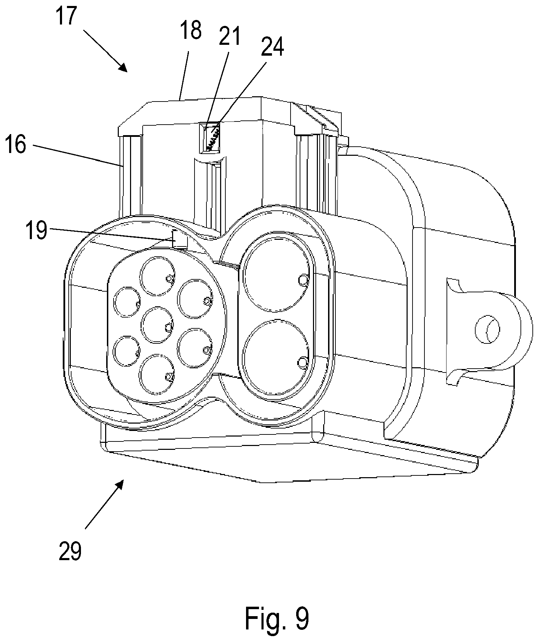

Figure 9 shows an alternative embodiment, in which the window 21 is located in the housing 16 of a charging receptacle 29. In this case, an actuator 4 according to the state of the art as shown in figures 1 and 2 can be used, for example. The locking pin 3 or drive 11 may be provided with a recess 28, however. If the drive 11 and/or locking pin 3 are located between the housing 18 of the actuator 4 and the housing 16 of the charging receptacle 2, the window 21 located in the housing 16 of the charging receptacle 29 can be used to access the locking pin 3 or the drive 11 for moving the locking pin 3 from the second position to the first position to release the charging cable 1.

## Claims

1. Electromechanical actuator (17) for locking a charging cable (1) in a charging receptacle (15), wherein the actuator (17) comprises a housing (18), a locking pin (19), and a drive (20), wherein the drive (20) is configured to move the locking pin (19) from a first position, in which the locking pin (19) releases the charging cable (1), to a second position, in which the locking pin (19) engages in an opening (6) of the charging cable (1) inserted into the charging receptacle (15),
wherein the housing (18) of the actuator (17) comprises a window (21) through which the locking pin (19) or the drive (20) can be accessed for moving the locking pin (19) from the second position to the first position,
**characterised in that**
the window (21) is sealed by means of a breakable barrier (24).

2. Actuator (17) according to claim 1, wherein the breakable barrier (24) is moulded as a thinner section of the housing (18).

3. Actuator (17) according to claim 1 or 2, wherein the window (21) has a size of less than 1 cm².

4. Actuator (17) according to any one of claims 1 to 3, wherein the window (21) has a depth of at least 0,5 cm between the outside of the housing (18) and the position at which the locking pin (19) or drive (20) can be accessed.

5. Actuator (17) according to any one of claims 1 to 4, further comprising a tool (25), which can be led through the window (21) to access the locking pin (19) or drive (20).

6. Actuator (17) according to any one of claims 1 to 5, wherein the locking pin (19) or drive has a recess (28), which can be accessed through the window (21) in the first and second position of the locking pin (19).

7. Actuator (17) according to any one of claims 1 to 5, wherein the drive (20) comprises a pinion (26), which can be accessed through the window (21) for moving the locking pin (19) from the second position to the first position.

8. Charging receptacle (29) for locking a charging cable (1), wherein the charging receptacle (29) comprises a housing (16) for receiving an actuator (17) comprising a locking pin (19) and a drive (20), which is configured to move the locking pin (19) from a first position, in which the locking pin (19) releases the charging cable (1), to a second position, in which the locking pin (19) engages in an opening (6) of the charging cable (1) inserted into the charging receptacle (29),
wherein the housing (16) of the charging receptacle comprises a window (21) through which the locking pin (19) or the drive (20) can be accessed for moving the locking pin (19) from the second position to the first position,
**characterised in that**
the window (21) is sealed by means of a breakable barrier (24).

9. Charging receptacle (29) according to claim 8, wherein the breakable barrier (24) is moulded as a thinner section of the housing (16).

10. Charging receptacle (29) according to claim 8 or 9, wherein the window (21) has a size of less than 1 cm².

11. Charging receptacle (29) according to any one of claims 8 to 10, wherein the window (21) has a depth of at least 0,5 cm between the outside of the housing and the position at which the locking pin (19) or drive (20) can be accessed.

12. Charging receptacle (29) according to any one of claims 8 to 11, further comprising a tool (25), which can be led through the window (21) to access the locking pin (19) or drive (20).

## Patentansprüche

1. Elektromechanischer Aktuator (17) zum Verriegeln eines Ladekabels (1) in einer Ladeaufnahme (15), wobei der Aktuator (17) ein Gehäuse (18), einen Verriegelungsstift (19) und einen Antrieb (20) umfasst, wobei der Antrieb (20) dazu konfiguriert ist, den Verriegelungsstift (19) von einer ersten Position, in welcher der Verriegelungsstift (19) das Ladekabel (1) freigibt, in eine zweite Position, in welcher der Verriegelungsstift (19) in eine Öffnung (6) des in die Ladeaufnahme (15) eingesetzten Ladekabels (1) eingreift, zu bewegen,
wobei das Gehäuse (18) des Aktuators (17) ein Fenster (21) umfasst, durch welches auf den Verriegelungsstift (19) oder den Antrieb (20) zum Bewegen des Verriegelungsstifts (19) von der zweiten Position in die erste Position zugegriffen werden kann,
**dadurch gekennzeichnet, dass**
das Fenster (21) mittels einer zerbrechlichen Barriere (24) abgedichtet ist.

2. Aktuator (17) gemäß Anspruch 1, wobei die zerbrechliche Barriere (24) als ein dünnerer Abschnitt des Gehäuses (18) geformt ist.

3. Aktuator (17) gemäß Anspruch 1 oder 2, wobei das Fenster (21) eine Größe von weniger als 1 cm² aufweist.

4. Aktuator (17) gemäß einem der Ansprüche 1 bis 3, wobei das Fenster (21) eine Tiefe von mindestens 0,5 cm zwischen dem Äußeren des Gehäuses (18) und der Position aufweist, in welcher auf den Verriegelungsstift (19) oder den Antrieb (20) zugegriffen werden kann.

5. Aktuator (17) gemäß einem der Ansprüche 1 bis 4, ferner umfassend ein Werkzeug (25), das durch das Fenster (21) geführt werden kann, um auf den Verriegelungsstift (19) oder Antrieb (20) zuzugreifen.

6. Aktuator (17) gemäß einem der Ansprüche 1 bis 5, wobei der Verriegelungsstift (19) oder der Antrieb eine Vertiefung (28) aufweist, auf die durch das Fenster (21) in der ersten und zweiten Position des Verriegelungsstifts (19) zugegriffen werden kann.

7. Aktuator (17) gemäß einem der Ansprüche 1 bis 5, wobei der Antrieb (20) ein Ritzel (26) umfasst, auf welches durch das Fenster (21) zum Bewegen des Verriegelungsstifts (19) von der zweiten Position in die erste Position zugegriffen werden kann.

8. Ladeaufnahme (29) zum Verriegeln eines Ladekabels (1), wobei die Ladeaufnahme (29) ein Gehäuse (16) zum Aufnehmen eines Aktuators (17) umfasst, der einen Verriegelungsstift (19) und einen Antrieb (20) umfasst, der dazu konfiguriert ist, den Verriegelungsstift (19) von einer ersten Position, in welcher der Verriegelungsstift (19) das Ladekabel (1) freigibt, in eine zweite Position, in welcher der Verriegelungsstift (19) in eine Öffnung (6) des in die Ladeaufnahme (29) eingesetzten Ladekabels (1) eingreift, zu bewegen,
wobei das Gehäuse (16) der Ladeaufnahme ein Fenster (21) umfasst, durch welches auf den Verriegelungsstift (19) oder den Antrieb (20) zum Bewegen des Verriegelungsstifts (19) von der zweiten Position in die erste Position zugegriffen werden kann,
**dadurch gekennzeichnet, dass**
das Fenster (21) mittels einer zerbrechlichen Barriere (24) abgedichtet ist.

9. Ladeaufnahme (29) gemäß Anspruch 8, wobei die zerbrechliche Barriere (24) als ein dünnerer Abschnitt des Gehäuses (16) geformt ist.

10. Ladeaufnahme (29) gemäß Anspruch 8 oder 9, wobei das Fenster (21) eine Größe von weniger als 1 cm² aufweist.

11. Ladeaufnahme (29) gemäß einem der Ansprüche 8 bis 10, wobei das Fenster (21) eine Tiefe von mindestens 0,5 cm zwischen dem Äußeren des Gehäuses (18) und der Position aufweist, in welcher auf den Verriegelungsstift (19) oder den Antrieb (20) zugegriffen werden kann.

12. Ladeaufnahme (29) gemäß einem der Ansprüche 8 bis 11, ferner umfassend ein Werkzeug (25), das durch das Fenster (21) geführt werden kann, um auf den Verriegelungsstift (19) oder Antrieb (20) zuzugreifen.

## Revendications

1. Actionneur électromécanique (17) pour verrouiller un câble de charge (1) dans un réceptacle de charge (15), dans lequel l'actionneur (17) comprend un logement (18), une broche de verrouillage (19) et un entraînement (20), dans lequel l'entraînement (20) est configuré pour déplacer la broche de verrouillage (19) d'une première position, dans laquelle la broche de verrouillage (19) libère le câble de charge (1), vers une seconde position, dans laquelle la broche de verrouillage (19) vient en prise dans une ouverture (6) du câble de charge (1) inséré dans le réceptacle de charge (15),
dans lequel le logement (18) de l'actionneur (17) comprend une fenêtre (21) à travers laquelle il est possible d'accéder à la broche de verrouillage (19) ou à l'entraînement (20) pour déplacer la broche de verrouillage (19) de la seconde position à la première position,
**caractérisé en ce que**
la fenêtre (21) est scellée au moyen d'une barrière cassable (24).

2. Actionneur (17) selon la revendication 1, dans lequel la barrière cassable (24) est moulée sous la forme d'une section plus mince du logement (18).

3. Actionneur (17) selon la revendication 1 ou 2, dans lequel la fenêtre (21) présente une taille inférieure à 1 cm².

4. Actionneur (17) selon l'une quelconque des revendications 1 à 3, dans lequel la fenêtre (21) présente une profondeur d'au moins 0,5 cm entre l'extérieur du logement (18) et la position dans laquelle il est possible d'accéder à la broche de verrouillage (19) ou à l'entraînement (20).

5. Actionneur (17) selon l'une quelconque des revendications 1 à 4, comprenant en outre un outil (25) qui peut être guidé à travers la fenêtre (21) pour accéder à la broche de verrouillage (19) ou à l'entraînement (20).

6. Actionneur (17) selon l'une quelconque des revendications 1 à 5, dans lequel la broche de verrouillage (19) ou l'entraînement présente un évidement (28) auquel il est possible d'accéder par la fenêtre (21) dans la première et la seconde position de la broche de verrouillage (19).

7. Actionneur (17) selon l'une quelconque des revendications 1 à 5, dans lequel l'entraînement (20) comprend un pignon (26) auquel il est possible d'accéder à travers la fenêtre (21) pour déplacer la broche de verrouillage (19) de la seconde position à la première position.

8. Réceptacle de charge (29) pour verrouiller un câble de charge (1), dans lequel la prise de charge (29) comprend un logement (16) pour recevoir un actionneur (17) comprenant une broche de verrouillage (19) et un entraînement (20), qui est configuré pour déplacer la broche de verrouillage (19) d'une première position, dans laquelle la broche de verrouillage (19) libère le câble de charge (1), vers une seconde position, dans laquelle la broche de verrouillage (19) vient en prise dans une ouverture (6) du câble de charge (1) inséré dans le réceptacle de charge (29),
dans lequel le logement (16) du réceptacle de charge comprend une fenêtre (21) à travers laquelle il est possible d'accéder à la broche de verrouillage (19) ou à l'entraînement (20) pour déplacer la broche de verrouillage (19) de la seconde position à la première position,
**caractérisé en ce que**
la fenêtre (21) est scellée au moyen d'une barrière cassable (24).

9. Réceptacle de charge (29) selon la revendication 8, dans lequel la barrière cassable (24) est moulée sous la forme d'une section plus mince du logement (16).

10. Réceptacle de charge (29) selon la revendication 8 ou 9, dans lequel la fenêtre (21) présente une taille inférieure à 1 cm².

11. Réceptacle de charge (29) selon l'une quelconque des revendications 8 à 10, dans lequel la fenêtre (21) présente une profondeur d'au moins 0,5 cm entre l'extérieur du logement et la position dans laquelle il est possible d'accéder à la broche de verrouillage (19) ou à l'entraînement (20).

12. Réceptacle de charge (29) selon l'une quelconque des revendications 8 à 11, comprenant en outre un outil (25), qui peut être conduit à travers la fenêtre (21) pour accéder à la broche de verrouillage (19) ou à l'entraînement (20).
